# EUROPEAN PATENT APPLICATION

(11) **EP 1 906 587 A2**
(43) Date of publication of application: **02.04.2008**
(21) Application number: 08100504.3
(22) Date of filing: 29.10.2004
(51) Int. Cl.: H04L 9/32

(54) **Secure authenticated channel**

(62) Divisional of application: 04822347.3
(71) Applicant: Thomson Licensing, Inc., 92100 Boulogne-Billancourt (FR)
(72) Inventor: Durand, Alain, 35000, RENNES (FR); Andreaux, Jean-Pierre, 1012 SP, AMSTERDAM (NL); Sirvent, Thomas, 35000, RENNES (FR)
(74) Representative: Berthier, Karine

(57) **Abstract**

Protocols (i.e. methods) and corresponding apparatuses for verifying a hash value. Two peers with knowledge of a common Diffie-Hellman permanent key, Kₚₑᵣₘ, and the identity and public key of the other peer. A first peer chooses a first ephemeral private key x and calculates the first corresponding ephemeral public key g^{x}, which is sent to the second peer. The second peer calculates a second ephemeral public key g^{y} in the same manner, and an ephemeral shared key **K**_{eph,} hashes g^{y}, **K**_{eph,} **K**_{perm,} and its identity, and sends g^{y} and the hash to the first peer. The first peer calculates **K**ₑₚₕ, verifies the hash, and hashes g^{x}, **K**ₑₚₕ, **K**ₚₑᵣₘ, and its identity, and sends it to the second peer that verifies this hash.

## Description

The invention relates generally to secure authenticated channels, and in particular to calculation of session keys for establishment of such channels for protection of digital content, for example in a digital television system.

Secure authenticated channels, well known in the art of cryptography, are established to allow two mutually authenticated devices (often called peers) to exchange information confidentially. A secure authenticated channel should preferably have the following characteristics:
- mutual authentication of the peers;
- key confirmation, i.e. a common secret is established and at least one peer is able to verify that the secret indeed is common;
- forward secrecy, i.e. old session keys cannot be calculated even when long-term secret keys (such as certificate secret keys) are known.

These characteristics can be formally proven mathematically, and it has been proven that if there exists a way to circumvent one of the above characteristics for a given cryptographic protocol, then the whole protocol may be broken with relative ease.

Over the years, the cryptographic community has proposed many protocols for secure authenticated channels. Only a few of these channels have been proven to fulfill the characteristics above.

US 5,889,865 describes a key establishment protocol between a pair of correspondents includes the generation by each correspondent of respective signatures. The signatures are derived from information that is private to the correspondent and information that is public. After exchange of signatures, the integrity of exchange messages can be verified by extracting the public information contained in the signature and comparing it with information used to generate the signature. A common session key may then be generated from the public and private information of respective ones of the correspondents.

US 5,953,420 describes generation of authenticated Diffie-Hellman keys. Each user first generates an authenticated first shared secret value from a first nonshared persistent secret value generated by that user and an authenticated first transformed value received from the other user over a trusted communications channel. Each user then dynamically generates a second shared secret value from a second nonshared secret value dynamically generated by that user and a dynamically generated second transformed value received from the other user. Each user thereafter generates one or more keys by concatenating the first and second shared secret values together with a count to form a concatenated value and passing the concatenated value through a one-way hash function to generate a hash value from which the keys are extracted. Since only the legitimate users possess the information necessary to construct the first shared secret value, a spoofer interacting with a user to generate a second shared secret value cannot generate the same key. Incrementing the count for successive hashes allows a multiplicity of keys to be generated from a given pair of shared secret values.

US 2004/081321 describes a key establishment protocol that includes the generation of a value of cryptographic function, typically a hash, of a session key and public information. This value is transferred between correspondents together with the information necessary to generate the session key. Provided the session key has not been compromised, the value of the cryptographic function will be the same at each correspondent. The value of the cryptographic function cannot be compromised or modified without access to the session key.

The protocols that do provide channels with the required characteristics all use a number of different cryptographic primitives: at least one asymmetric primitive (such as asymmetric encryption or digital signature), hash functions, Message Authentication Code (MAC), and, in some of them, other primitives such as symmetric encryption. A problem with these protocols is that they are quite resource consuming and are as such difficult to implement in a device with limited computing capabilities, such as for example a portable security module, like a smart card. Another problem is that the use of many cryptographic primitives makes it difficult to prove that a protocol is secure.

The present invention provides a secure access channel protocol that has the required characteristics and that is particularly suitable for implementation in a device with limited computing capabilities.

Throughout the description, it will be assumed that, as cryptography is a mature art, the basic concepts are well known. These concepts will for reasons of clarity and succinctness not be described more than necessary for the comprehension of the invention.

In a first aspect, the invention is directed to a method of calculating a session key common to a first and a second device (11, 21). The first device has a certificate (Cₐ) comprising a public key (g^{a}) and an identity corresponding to itself (IDₐ), and knowledge of the identity corresponding to itself (IDₐ), a private key (a), and the public key (g^{a}). The second device has a corresponding certificate and knowledge. The first device chooses a first ephemeral private key (x), calculates a first ephemeral public key (g^{x}), and sends its certificate (Cₐ) and the first ephemeral public key (g^{x}) to the second device. Upon reception of the certificate of the first device (Cₐ) and the first ephemeral public key (g^{x}), the second device verifies the certificate of the first device(Cₐ), chooses a second ephemeral private key (y), calculates a second ephemeral public key (g^{y}), calculates an ephemeral shared key (Kₑₚₕ) from the first ephemeral public key (g^{x}) and the second ephemeral private key (y), calculates a permanent key (Kₚₑᵣₘ) from the public key of the first device (g^{a}) and its own private key (b), calculates a first value (H(g^{y}, Kₑₚₕ, Kₚₑᵣₘ, ID_{b})) from the second ephemeral public key (g^{y}), the ephemeral shared key (Kₑₚₕ), the permanent key (Kₚₑᵣₘ), and the identity corresponding to itself (ID_{b}), and sends its certificate (C_{b}), the second ephemeral public key (g^{y}) and the first value (H(g^{y}, Kₑₚₕ, Kₚₑᵣₘ, ID_{b})) to the first device. Upon reception of the certificate of the second device (C_{b}), the second ephemeral public key (g^{y}) and the first value (H(g^{y}, Kₑₚₕ, Kₚₑᵣₘ, ID_{b})) from the second device, the first device verifies the certificate of the second device(C_{b}), calculates the ephemeral shared key (Kₑₚₕ) from the second ephemeral public key (g^{y}) and the first ephemeral private key (x), calculates the permanent key (Kₚₑᵣₘ) from the public key of the first device (g^{b}) and its own private key (a), verifies the first value (H(g^{y}, Kₑₚₕ, Kₚₑᵣₘ, ID_{b})), calculates a second value (H(g^{x}, Kₑₚₕ, Kₚₑᵣₘ, IDₐ)) from the first ephemeral public key (g^{x}), the ephemeral shared key (Kₑₚₕ), the permanent key (Kₚₑᵣₘ), and the identity corresponding to itself (IDₐ), and sends the second value (H(g^{x}, Kₑₚₕ, Kₚₑᵣₘ, IDₐ)) to the second device. Upon reception of the second value (H(g^{x}, Kₑₚₕ, Kₚₑᵣₘ, IDₐ)), the second device verifies the second value (H(g^{x}, Kₑₚₕ, Kₚₑᵣₘ, IDₐ)), and calculates a session key (Kₛₑₛₛ) as a function of the ephemeral shared key (Kₑₚₕ). The first device also calculates the session key (Kₛₑₛₛ) as a function of the ephemeral shared key (Kₑₚₕ).

In a second aspect, the invention is directed to a first device (11) for participating, with a second device (21), in the calculation of a session key. The first device has a certificate (Cₐ) comprising a public key (g^{a}) and an identity corresponding to itself (IDₐ), and knowledge of the identity corresponding to itself (IDₐ), a private key (a), and the public key (g^{a}). The first device comprises a processor (12) for choosing an ephemeral private key (x); calculating a first ephemeral public key (g^{x}); sending its certificate (Cₐ) and the first ephemeral public key (g^{x}) to the second device; receiving a certificate of the second device (C_{b}), a second ephemeral public key (g^{y}) and a first value (H(g^{y}, Kₑₚₕ, Kₚₑᵣₘ, ID_{b})) from the second device, the certificate (C_{b}) comprising a public key (g^{b}) and an identity of the second device (ID_{b}), and the first value (H(g^{y}, Kₑₚₕ, Kₚₑᵣₘ, ID_{b})) being calculated from the second ephemeral public key (g^{y}), an ephemeral shared key (Kₑₚₕ), a permanent key (Kₚₑᵣₘ), and the identity corresponding to the second device (ID_{b}); verifying the certificate of the second device(C_{b}); calculating the ephemeral shared key (Kₑₚₕ) from the second ephemeral public key (g^{y}) and the ephemeral private key (x); calculating the permanent key (Kₚₑᵣₘ) from the public key of the first device (g^{b}) and its own private key (a); verifying the first value (H(g^{y}, Kₑₚₕ, Kₚₑᵣₘ, ID_{b})); calculating a second value (H(g^{x}, Kₑₚₕ, Kₚₑᵣₘ, IDₐ)) from the first ephemeral public key (g^{x}), the ephemeral shared key (Kₑₚₕ), the permanent key (Kₚₑᵣₘ), and the identity corresponding to itself (IDₐ); sending the second value (H(g^{x}, Kₑₚₕ, Kₚₑᵣₘ, IDₐ)) to the second device; and calculating a session key (Kₛₑₛₛ) as a function of the ephemeral shared key (Kₑₚₕ).

In a third aspect, the invention is directed to a second device (21) for participating, with a first device (11), in the calculation of a session key. The second device has a certificate (C_{b}) comprising a public key (g^{b}) and an identity corresponding to itself (ID_{b}), and knowledge of the identity corresponding to itself (ID_{b}), a private key (b), and the public key (g^{b}). The second device comprises a processor (22) for receiving a certificate of the first device (Cₐ) and a first ephemeral public key (g^{x}), the certificate comprising a public key (g^{a}) and an identity of the first device (IDₐ); verifying the certificate of the first device (Cₐ); choosing an ephemeral private key (y); calculating a second ephemeral public key (g^{y}); calculating an ephemeral shared key (Kₑₚₕ) from the first ephemeral public key (g^{x}) and the ephemeral private key (y); calculating a permanent key (Kₚₑᵣₘ) from the public key of the first device (g^{a}) and its own private key (b); calculating a first value (H(g^{y}, Kₑₚₕ, Kₚₑᵣₘ, ID_{b})) from the second ephemeral public key (g^{y}), the ephemeral shared key (Kₑₚₕ), the permanent key (Kₚₑᵣₘ), and the identity corresponding to itself (ID_{b}); sending its certificate (C_{b}), the second ephemeral public key (g^{y}) and the first value (H(g^{y}, Kₑₚₕ, Kₚₑᵣₘ, ID_{b})) to the first device; receiving a second value (H(g^{x}, Kₑₚₕ, Kpₑᵣₘ, IDₐ)) from the first device, the second value being calculated from the first ephemeral public key (g^{x}), the ephemeral shared key (Kₑₚₕ), the permanent key (Kₚₑᵣₘ), and the identity corresponding to the first device (IDₐ); verifying the second value (H(g^{x}, Kₑₚₕ, Kₚₑᵣₘ, IDₐ)); and
calculating the session key (Kₛₑₛₛ) as a function of the ephemeral shared key (Kₑₚₕ).

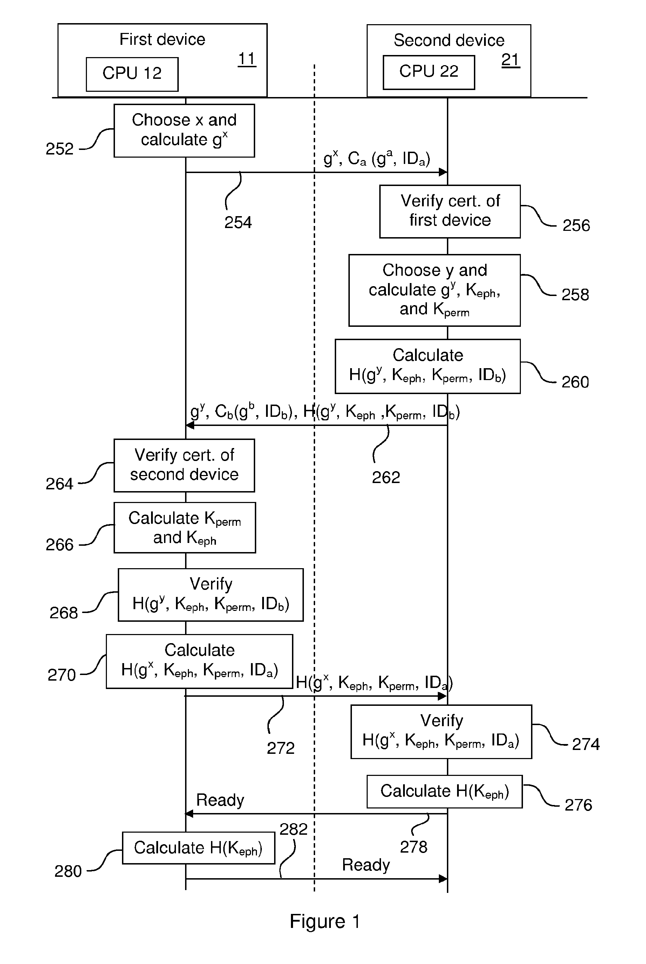

Figure 1 illustrates the session key exchange according to an embodiment of the present invention.

Figure 1 illustrates the session key exchange according to an embodiment of the present invention.

Before the start of the method, the first device 11 knows its identity IDₐ, its own private key a and public key g^{a}. g^{a} is a short notation for g^{a} mod p, where a is the first device's private key, g is a known generator and p is a known prime number, as is well known in the art. The second device 21 has the corresponding knowledge: ID_{b}, b, g^{b}. Certificates for the devices comprise the public key and the identity; Cₐ(g^{a}, IDₐ) and C_{b}(g^{b}, ID_{b}), respectively. The devices 11, 12 also have processors (CPU) 12, 22 adapted to effect the steps of the method.

In step 252, the first device 11 chooses, preferably randomly, a first ephemeral private key x and calculates an ephemeral public key g^{x}, that it sends together with its certificate Cₐ(g^{a}, IDₐ) to the second device 21 in message 254.

Upon reception of message 254, the second device 21 verifies the certificate Cₐ(g^{a}, IDₐ) of the first device 11; step 256. If the verification is unsuccessful, the second device 21 abandons the method. However, if the verification is successful, then it chooses, preferably randomly, a second ephemeral private key y, and calculates a second ephemeral public key g^{y}, a ephemeral shared key Kₑₚₕ = g^{xy}, and a Diffie-Hellman permanent key Kₚₑᵣₘ = g^{ab}, in step 258.

In step 260, the second device 21 then calculates a first hash value H(g^{y}, Kₑₚₕ, Kₚₑᵣₘ, ID_{b}) using the second ephemeral public key g^{y}, the ephemeral shared key Kₑₚₕ, the Diffie-Hellman permanent key Kₚₑᵣₘ, and its identity ID_{b}, and a suitable hash function, for example one of the many functions known in the art. It should be known that other suitable functions than hash functions may be used for this and the following hash value calculations of the embodiment. The second device 21 then sends the second ephemeral public key g^{y}, its certificate C_{b}(g^{b}, ID_{b}), and the first hash value H(g^{y}, Kₑₚₕ, Kₚₑᵣₘ, ID_{b}) to the first device 11 in message 262.

Upon reception of message 262, the first device 11 verifies the certificate C_{b}(g^{b}, ID_{b}) of the second device 21; step 264. If the verification is unsuccessful, the first device 11 abandons the method. However, if the verification is successful, the first device 11 computes the ephemeral shared key Kₑₚₕ and the Diffie-Hellman permanent key Kₚₑᵣₘ in step 266. In step 268, the first device 11 verifies the first hash value, using the same hash function as the second device 21 used in step 260. If the first hash value is not verified, then the first device 11 aborts the method, but if the first hash value is verified, then the first device 11 calculates a second hash value H(g^{x}, Kₑₚₕ, Kₚₑᵣₘ, IDₐ) in step 270, using the first ephemeral public key g^{x}, the ephemeral shared key Kₑₚₕ, the Diffie-Hellman permanent key Kₚₑᵣₘ and its identity IDₐ. The first device 11 sends the second hash value H(g^{x}, Kₑₚₕ, Kₚₑᵣₘ, IDₐ) to the second device 21 in message 272.

Upon reception of the message 272, the second device 21 verifies the second hash value H(g^{x}, Kₑₚₕ, Kₚₑᵣₘ, IDₐ) in step 274, using the same hash function as the one used by the first device 10 in step 270. If the second hash value is not verified, then the second device 21 aborts the protocol, but if the second hash value is verified, then the second device 21 calculates, in step 276, a session key Kₛₑₛₛ by calculating the hash value of the ephemeral shared key Kₑₚₕ. Then it sends a "ready" message 278 to the first device 11 to indicate that the second hash value H(g^{x}, Kₑₚₕ, Kₚₑᵣₘ, IDₐ) has been successfully verified and the session key Kₛₑₛₛ has been calculated.

Upon reception of the "ready" message 278 from the second device 21, the first device 11 calculates, in step 280, the same session key Kₛₑₛₛ by calculating the hash value of the ephemeral shared key Kₑₚₕ, using the same hash function as that used by the second device 21 in step 276. Then the first device 11 sends a "ready" message 282 to the second device 21 to indicate that it too has calculated the session key Kₛₑₛₛ.

At this point, both the first device 11 and the second device 21 possess the session key Kₛₑₛₛ that can be used to protect information sent between them. With the protocol according to the invention, the confidentiality of the private keys is assured, the authentication and the key confirmation are mutual. Furthermore, the forward secrecy and the robustness against leakage of previous session key are assured as well. A person skilled in the art will appreciate that the three hash functions described in connection with steps 212, 220, and 226 may be different, the same, or that two of them are the same while the third is different.

It should be noted that where this description makes reference to random numbers, these numbers are often in practice pseudo-random.

The expression "security module" encompasses any kind of security module, portable or stationary, that comprises a processor and can be used to establish a secure authenticated channel according to the invention, such as for example smart cards, PC cards (formerly known as PCMCIA cards), and integrated circuits soldered to the Printed Circuit Board of an apparatus such as a television.

The embodiment described hereinbefore is particularly suited for implementation in a digital television set and a security module. However, a person skilled in the art will appreciate that the invention may be implemented and used by any kind of device with the necessary resources, i.e. a processor and preferably a memory storing the necessary information. Non-limitative examples of other devices are DVD players, computers interacting with external accessories, and Automatic Teller Machines (ATMs) and bankcards.

## Claims

1. A first device (11) adapted to verify a hash value, the first device having a certificate (Cₐ) comprising a public key (g^{a}) and an identity corresponding to itself (IDₐ), and knowledge of the identity corresponding to itself (IDₐ), a private key (a), and the public key (g^{a}),
the first device (11) comprising a processor (12) for:
- choosing an ephemeral private key (x);
- calculating a first ephemeral public key (g^{x});
- sending its certificate (Cₐ) and the first ephemeral public key (g^{x}) to a second device (21);
- receiving a certificate of the second device (C_{b}), a second ephemeral public key (g^{y}) and a first hash value (H(g^{y}, Kₑₚₕ, Kₚₑᵣₘ, ID_{b})) from the second device, the certificate (C_{b}) comprising a public key (g^{b}) and an identity of the second device (ID_{b}), and the first hash value (H(g^{y}, Kₑₚₕ, Kₚₑᵣₘ, ID_{b})) being calculated from the second ephemeral public key (g^{y}), an ephemeral shared key (Kₑₚₕ), a permanent key (Kₚₑᵣₘ), and the identity corresponding to the second device (ID_{b});
- verifying the certificate of the second device (C_{b});
- calculating the ephemeral shared key (Kₑₚₕ) from the second ephemeral public key (g^{y}) and the ephemeral private key (x);
- calculating the permanent key (Kₚₑᵣₘ) from the public key of the second device (g^{b}) and its own private key (a); and
- verifying the first hash value (H(g^{y}, Kₑₚₕ, Kₚₑᵣₘ, ID_{b})).

2. The first device of claim 1, wherein the processor (12) is further for:
- calculating a second hash value (H(g^{x}, Kₑₚₕ, Kₚₑᵣₘ, IDₐ)) from the first ephemeral public key (g^{x}), the ephemeral shared key (Kₑₚₕ), the permanent key (Kₚₑᵣₘ), and the identity corresponding to itself (IDₐ); and
- sending the second hash value (H(g^{x}, Kₑₚₕ, Kₚₑᵣₘ, IDₐ)) to the second device.

3. A second device (21) adapted to verify a hash value, the second device having a certificate (C_{b}) comprising a public key (g^{b}) and an identity corresponding to itself (ID_{b}), and knowledge of the identity corresponding to itself (ID_{b}), a private key (b), and the public key (g^{b}),
the second device (21) comprising a processor (22) for:
- receiving from a first device (11) a certificate of the first device (Cₐ) and a first ephemeral public key (g^{x}), the certificate comprising a public key (g^{a}) and an identity of the first device (IDₐ);
- verifying the certificate of the first device (Cₐ);
- choosing an ephemeral private key (y);
- calculating a second ephemeral public key (g^{y});
- calculating an ephemeral shared key (Kₑₚₕ) from the first ephemeral public key (g^{x}) and the ephemeral private key (y);
- calculating a permanent key (Kₚₑᵣₘ) from the public key of the first device (g^{a}) and its own private key (b);
- calculating a first hash value (H(g^{y}, Kₑₚₕ, Kₚₑᵣₘ, ID_{b})) from the second ephemeral public key (g^{y}), the ephemeral shared key (Kₑₚₕ), the permanent key (Kₚₑᵣₘ), and the identity corresponding to itself (ID_{b});
- sending its certificate (C_{b}), the second ephemeral public key (g^{y}) and the first hash value (H(g^{y}, Kₑₚₕ, Kₚₑᵣₘ, ID_{b})) to the first device;
- receiving a second hash value (H(g^{x}, K_{eph,} Kₚₑᵣₘ, IDₐ)) from the first device, the second value being calculated from the first ephemeral public key (g^{x}), the ephemeral shared key (Kₑₚₕ), the permanent key (Kₚₑᵣₘ), and the identity corresponding to the first device (IDₐ); and
- verifying the second hash value (H(g^{x}, Kₑₚₕ, Kₚₑᵣₘ, IDₐ)).

4. A method for verifying a hash value, the being performed by a first device (11) having a certificate (Cₐ) comprising a public key (g^{a}) and an identity corresponding to itself (IDₐ), and knowledge of the identity corresponding to itself (IDₐ), a private key (a), and the public key (g^{a}),
the method comprising the steps of:
- choosing (252) an ephemeral private key (x);
- calculating (252) a first ephemeral public key (g^{x});
- sending (254) its certificate (Cₐ) and the first ephemeral public key (g^{x}) to a second device (21);
- receiving (262) a certificate of the second device (C_{b}), a second ephemeral public key (g^{y}) and a first hash value (H(g^{y}, Kₑₚₕ, Kₚₑᵣₘ, ID_{b})) from the second device, the certificate (C_{b}) comprising a public key (g^{b}) and an identity of the second device (ID_{b}), and the first hash value (H(g^{y}, Kₑₚₕ, Kₚₑᵣₘ, ID_{b})) being calculated from the second ephemeral public key (g^{y}), an ephemeral shared key (Kₑₚₕ), a permanent key (Kₚₑᵣₘ), and the identity corresponding to the second device (ID_{b});
- verifying (264) the certificate of the second device (C_{b});
- calculating (266) the ephemeral shared key (Kₑₚₕ) from the second ephemeral public key (g^{y}) and the ephemeral private key (x);
- calculating (266) the permanent key (Kₚₑᵣₘ) from the public key of the second device (g^{b}) and its own private key (a); and
- verifying (268) the first hash value (H(g^{y}, Kₑₚₕ, Kₚₑᵣₘ, ID_{b})).

5. A method for verifying a hash value, the method being performed by a second device (21) having a certificate (C_{b}) comprising a public key (g^{b}) and an identity corresponding to itself (ID_{b}), and knowledge of the identity corresponding to itself (ID_{b}), a private key (b), and the public key (g^{b}),
the method comprising the steps of:
- receiving (254) from a first device (11) a certificate of the first device (Cₐ) and a first ephemeral public key (g^{x}), the certificate comprising a public key (g^{a}) and an identity of the first device (IDₐ);
- verifying (256) the certificate of the first device (Cₐ);
- choosing (258) an ephemeral private key (y);
- calculating (258) a second ephemeral public key (g^{y});
- calculating (258) an ephemeral shared key (Kₑₚₕ) from the first ephemeral public key (g^{x}) and the ephemeral private key (y);
- calculating (258) a permanent key (Kₚₑᵣₘ) from the public key of the first device (g^{a}) and its own private key (b);
- calculating (260) a first hash value (H(g^{y}, Kₑₚₕ, Kₚₑᵣₘ, ID_{b})) from the second ephemeral public key (g^{y}), the ephemeral shared key (Kₑₚₕ), the permanent key (Kₚₑᵣₘ), and the identity corresponding to itself (ID_{b});
- sending (262) its certificate (C_{b}), the second ephemeral public key (g^{y}) and the first hash value (H(g^{y}, Kₑₚₕ, Kₚₑᵣₘ, ID_{b})) to the first device;
- receiving (272) a second hash value (H(g^{x}, Kₑₚₕ, Kₚₑᵣₘ, IDₐ)) from the first device, the second value being calculated from the first ephemeral public key (g^{x}), the ephemeral shared key (Kₑₚₕ), the permanent key (Kₚₑᵣₘ), and the identity corresponding to the first device (IDₐ); and
- verifying (274) the second hash value (H(g^{x}, Kₑₚₕ, Kₚₑᵣₘ, IDₐ)).
